# EUROPEAN PATENT SPECIFICATION

(11) **EP 1 843 557 B1**
(45) Date of publication and mention of the grant of the patent: **13.12.2017**
(21) Application number: 07014688.1
(22) Date of filing: 12.09.2003
(51) Int. Cl.: H04M 1/02

(54) **Hinge device for portable wireless terminal**
Scharniervorrichtung für ein tragbares drahtloses Endgerät
Dispositif à charnière pour terminal portable sans fil

(30) Priority: 13.09.2002 KR 20020055826; 14.09.2002 KR 20020055976; 28.03.2003 KR 20030019476; 30.08.2003 KR 20030060632
(43) Date of publication of application: 10.10.2007
(62) Divisional of application: 03020799.7
(73) Proprietor: Samsung Electronics Co., Ltd., Suwon-si, Gyeonggi-do, 443-742 (KR)
(72) Inventor: Kim, Si-Wan, Suwon-si Gyeonggi-do 443-742 (KR)
(74) Representative: Grünecker Patent- und Rechtsanwälte PartG mbB

(56) References cited:
- EP-A- 1 207 671
- PATENT ABSTRACTS OF JAPAN vol. 2002, no. 09, 4 September 2002 (2002-09-04) & JP 2002 135380 A (MATSUSHITA ELECTRIC IND CO LTD), 10 May 2002 (2002-05-10)
- PATENT ABSTRACTS OF JAPAN vol. 2000, no. 12, 3 January 2001 (2001-01-03) & JP 2000 240636 A (MITSUBISHI STEEL MFG CO LTD), 5 September 2000 (2000-09-05)
- PATENT ABSTRACTS OF JAPAN vol. 1999, no. 01, 29 January 1999 (1999-01-29) & JP 10 290385 A (SONY CORP), 27 October 1998 (1998-10-27)
- PATENT ABSTRACTS OF JAPAN vol. 2000, no. 26, 1 July 2002 (2002-07-01) & JP 2001 251406 A (HITACHI LTD), 14 September 2001 (2001-09-14)
- PATENT ABSTRACTS OF JAPAN vol. 2000, no. 25, 12 April 2001 (2001-04-12) & JP 2001 227229 A (STRAWBERRY CORPORATION), 24 August 2001 (2001-08-24)

## Description

### BACKGROUND OF THE INVENTION

### 1. Field of the Invention

The present invention relates to a portable wireless terminal, and more particularly to a hinge device of a portable wireless terminal for allowing a housing of the portable wireless terminal to be rotated about two hinge axes.

### 2. Description of the Related Art

Generally, portable wireless terminals are devices which allow a user to communicate with other users in a wireless manner. Such portable wireless terminals are classified into bar-type, flip-type and folder-type terminals according to the external appearance thereof. The bar-type terminal includes a single housing having a bar-shape. The flip-type terminal includes a flip or a cover rotatably coupled to a bar-type housing by means of a hinge device. The folder-type terminal includes a folder rotatably and foldably coupled to a single bar-type housing by means of a hinge device.

In addition, such wireless terminals can be classified into rotation-type terminals and sliding-type terminals according to the operating manner of a folder or a housing. The rotation-type terminal includes two housings, which are aligned in opposition to each other and rotatably coupled to each other. The sliding-type terminal includes two housings aligned in opposition to each other, in which one housing can be slidably moved lengthwise with respect to the other housing.
The above-mentioned portable wireless terminals are well known to those skilled in the art, and typically include an antenna device, a data input/output device, and a data transmitting/receiving device. Generally, a key pad allowing a user to input data by pushing the key pad with his/her fingers is mainly used as a data input device. A touch pad or a touch screen also can be used as a data input/output device. In addition, an LCD is mainly used as a data output device, i.e. a display.

The key pad used for inputting data includes a plurality of keys generally consisting of number keys, character keys, a send key, an end key, and a function key. In addition, fifteen to twenty keys are aligned on an upper surface of a housing of the portable wireless terminal. Of course, such keys are exposed to the upper surface of the housing so that a user can input data by pushing keys using his/her fingers. In addition, the portable wireless terminal may include a photographing device, such as a lens, for image communication. The user can make such image communication with other users or can photograph an object by using the photographing device.

Recently, users' tastes for portable wireless terminals have become diversified, and users' demands for information has increased remarkably. However, although various kinds of additional devices, such as a camera lens or a camcorder, have been added to portable wireless terminals, the display device for data output is usually fixedly installed or rotated in one direction in such a portable wireless terminal, thereby causing inconvenience when photographing an object or making an image communication with other users. In order to solve the above problem, various terminals having new design concepts have been suggested. However, implementation of the new designs for the new terminals in commercial use has not yet occurred.

The Japanese patent application JP 2002 135380 A, discloses a foldable mobile electronic device, wherein a first case provided with a display section and a second case provided with a transmission section are foldably connected by a hinge and the first case is turnable around a turning shaft.

The Japanese patent application JP 2000 240636 A discloses a hinge mechanism, which enables the above specified turning characteristics and provides further a locking mechanism.

However, none of the prior art documents provide information on how to further facilitate camera use for capturing an image, and/or for video communication with other users, or how to provide a versatile keypad arrangement on a portable wireless terminal.

### SUMMARY OF THE INVENTION

Accordingly, the present invention has been made to solve the above-mentioned problems occurring in the prior art, and an object of the present invention is to provide a hinge device of a portable wireless terminal adapted to various tastes and demand of users.

Another object of the present invention is to provide a hinge device of a portable wireless terminal, capable of properly adjusting a photographing direction of a camera lens and an image displaying direction of a display device, thereby improving convenience of use.

In order to accomplish this object, there is provided a hinge device of a portable wireless terminal which includes a first housing and a second housing, the first housing having a first hinge axis extending parallel to an upper surface of the first housing, the second housing being rotatably coupled to the first housing in such a manner that the second housing moves away from the first housing or approaches the first housing as a result of rotational movement thereof, the second housing having a second hinge axis extending perpendicular to the upper surface of the first housing, the second hinge axis providing a rotational center for the first hinge axis, the first and second hinge axes acting as rotational axes of the second housing when the second housing rotates with respect to the first housing, the hinge device comprising: a first hinge module including a first hinge base fixedly coupled to the first housing, and a second hinge base rotatably coupled to the first hinge base in opposition to the first hinge base so as to be rotated about the second hinge axis; and a second hinge module fixed to the second housing and connecting the second housing to the second hinge base in order to allow the second housing to rotate about the first hinge axis. The second hinge base includes receiving grooves formed on the upper portion thereof for receiving at least one of a camera lens and a keypad in the way defined by the independent claim.

### BRIEF DESCRIPTION OF THE DRAWINGS

The above objects and other features and advantages of the present invention will be more apparent from the following detailed description taken in conjunction with the accompanying drawings, in which:
FIG. 1 is an exploded perspective view showing a hinge device of a portable wireless terminal according to a first embodiment of the present invention;
FIG. 2 is an exploded perspective view of the hinge device viewed from an inverted direction of FIG. 1;
FIG. 3 is an exploded perspective view of a second hinge module shown in FIG 1;
FIG. 4 is an assembled cross-sectional view of the hinge device shown in FIG. 1;
FIG. 5 is an assembled cross-sectional view of the second hinge module shown in FIG. 3;
FIG. 6 is a perspective view showing the hinge device of FIG. 1 being assembled into a portable wireless terminal;
FIGS. 7 to 14 are plan views showing an opening/closing operation of a portable wireless terminal having the hinge device shown in FIG. 1;
FIG. 15 is an exploded perspective view showing a hinge device of a portable wireless terminal according to a second embodiment of the present invention;
FIG. 16 is an exploded perspective view of the hinge device viewed from an inverted direction of FIG. 15; and
FIG. 17 is an assembled view showing the hinge device of FIG. 15 assembled into a portable wireless terminal.

### DETAILED DESCRIPTION OF THE PREFERRED EMBODIMENT

Hereinafter, a preferred embodiment of the present invention will be described with reference to the accompanying drawings. In the following description of the present invention, the same reference numerals are used to designate the same or similar components and a detailed description of known functions and configurations incorporated herein will be omitted when it may make the subject matter of the present invention rather unclear.

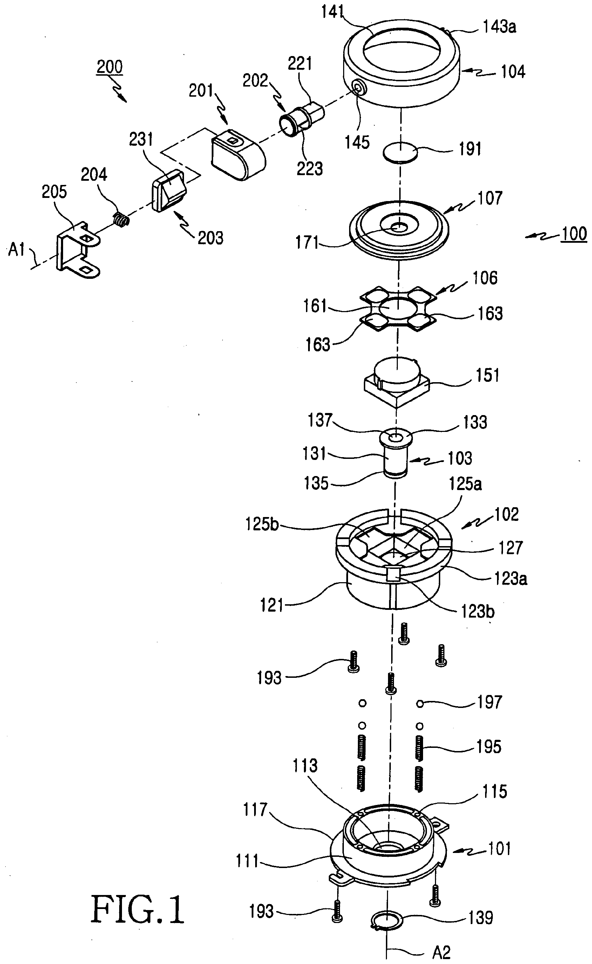

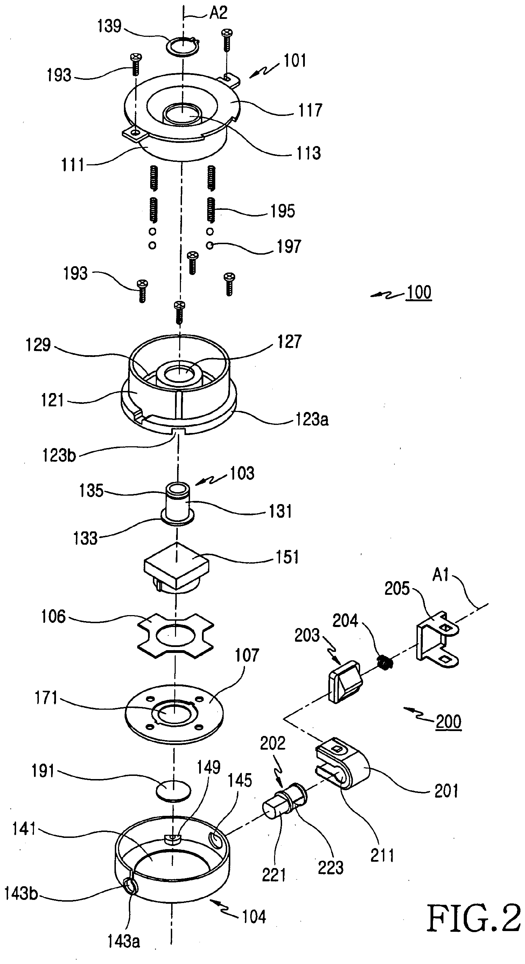

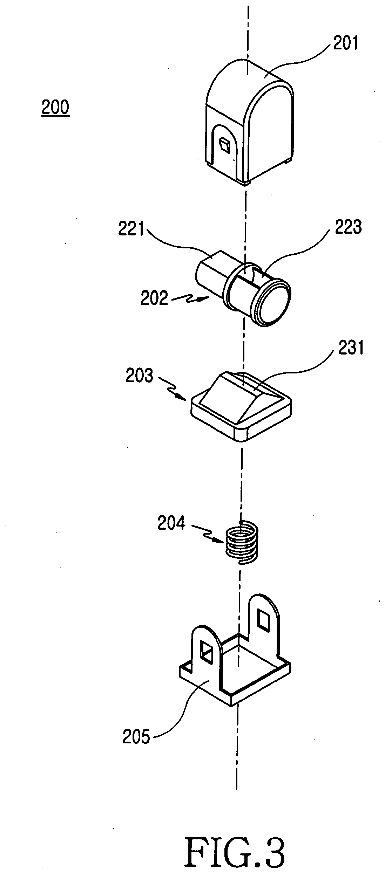

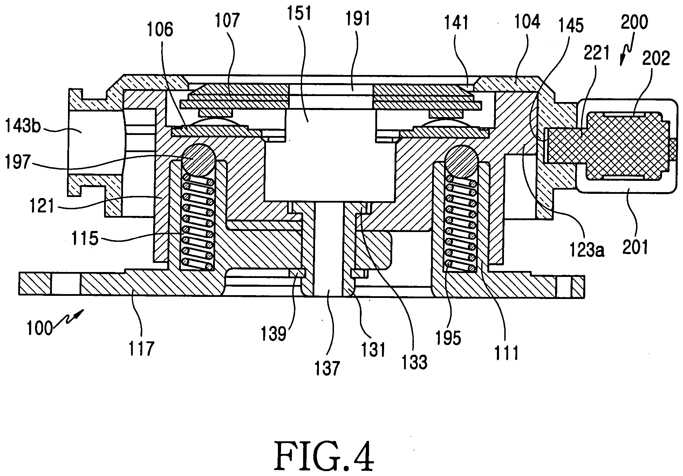

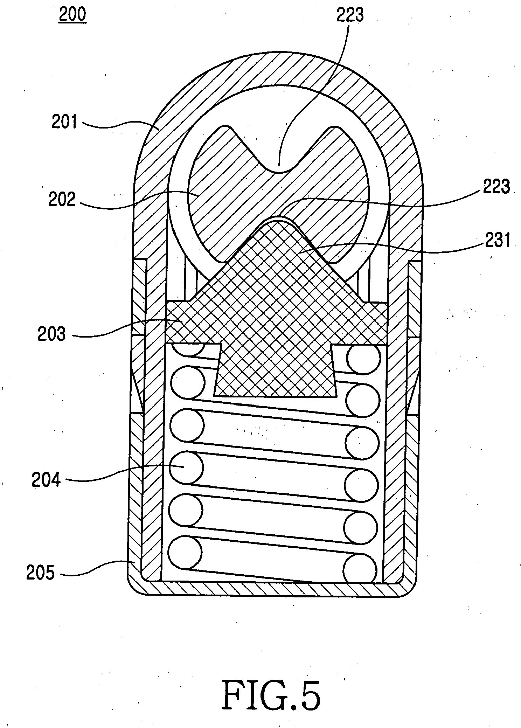

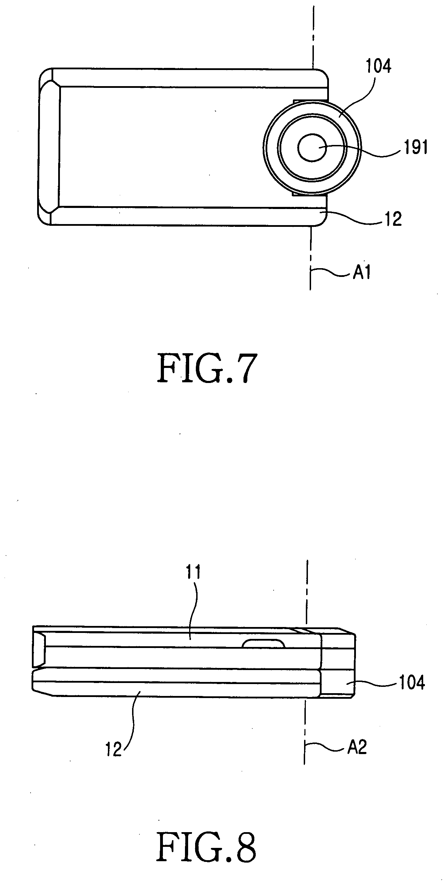

Referring to FIGS. 1 to 6, a hinge device of a portable wireless terminal according to a first embodiment of the present invention includes a first hinge module 100 having first and second hinge bases 101 and 102, which are aligned in opposition to each other and rotatably coupled to each other to provide a second hinge axis A2, and a second hinge module 200 rotatably coupled to the first hinge module 100 to provide a first hinge axis A1. The hinge device foldably couples a first housing 11 (as shown in FIG. 8) of the portable wireless terminal to a second housing 12 (also shown in FIG. 8), which is aligned in opposition to the first housing 11 in such a manner that the second housing 12 can be rotated about two axes with respect to the first housing 11. The first hinge axis A1 extends parallel to an upper surface of the first housing 11 (FIG. 7). The second housing 12 is rotated about the first hinge axis A1 so that the second housing 12 moves away from the first housing 11 or approaches the first housing 11 according to a rotational movement thereof. The second hinge axis A2 extends perpendicular to the upper surface of the first housing 11 (FIG. 8). Thus, the second hinge axis A2 extends perpendicular to the first hinge axis A1 and the first hinge axis A1 is rotated about the second hinge axis A2. The second housing 12 is rotated about the second hinge axis A2 in opposition to the first housing 11.

The first hinge base 101 is fixed to an inner portion of the first housing 11 preferably adjacent to one end of the first housing 11. An upper end of the first hinge base 101 protrudes to the upper surface of the first housing 11. The first hinge base 101 includes a cylindrical body 111 having a first perforation hole 113 extending in a direction of the second hinge axis A2, and a rib 117 outwardly protruding from a lower outer wall of the cylindrical body 111 and formed at a circumferential portion thereof with at least one coupling hole. The hinge base 101 is coupled to the inner portion of the first housing 11 by means of a coupling device, such as a screw 193. An upper end of the cylindrical body 111 is exposed to the upper surface of the first housing 11 and formed with at least one spring hole 115. The spring holes 115 are aligned along an upper circumferential part of the cylindrical body 111 at the same angular interval. A compression spring 195 is accommodated in each spring hole 115, and a ball 197 is mounted on an end of the compression spring 195. The ball 197 is held at an end of the spring hole 115 by receiving elastic force from the compression spring 195. The ball 197 slidably moves along an inner surface of the second hinge base 102. Thus, it is preferable to form the spring holes 115 symmetrically to each other such that elastic force is uniformly applied to the ball 197.

The second hinge base 102 includes a rotating member 121 having an opened lower end and a partially opened upper end. The rotating member 121 has a second perforation hole 127 extending in a direction of the second hinge axis A2. The first hinge base 101 is assembled into the opened lower end of the second hinge base 102. In this state, the first perforation hole 113 is coaxially aligned with the second perforation hole 127. That is, when the first hinge base 101 is assembled with the second hinge base 102, the first perforation hole 113 is aligned in line with the second perforation hole 127. A coupling part 123a outwardly protrudes along a circumferential portion of the partially opened upper end of the second hinge base 102. The coupling part 123a has at least one coupling hole 123b acting as a coupling device.

Slots (not shown) having predetermined depth and a shape corresponding to a shape of the ball 197 are formed along an inner circumferential portion of the partially opened upper end of the second hinge base 102 at the same angular interval. Rotation of the second hinge base 102 is stopped at a position, in which the balls 197 face the slots. That is, the balls 197 engage the slots due to elastic force of the compression springs 195, so that rotation of the second hinge base 102 is stopped. Moreover, a sliding groove 129 is formed at an upper inner portion of the second hinge base 102 along a rotating route of the balls 197.

The hinge device has a hinge coupler 103 including a flange 133 installed on an upper end of the second hinge base 102, a supporting shaft 131 protruding from the flange 133 in a direction of the second hinge axis A2 and extending through the first and second perforation holes 113 and 127, and a coupling slot 135 formed along an outer circumferential portion of the supporting shaft 131. The coupling slot 135 is coupled to a snap ring 139 at a lower end of the first hinge base 101, so that the first hinge base 101 is rotatably coupled to the second hinge base 102 in opposition to each other by means of the hinge coupler 103.

In addition, receiving grooves are formed on the upper portion of the second hinge base 102. The receiving grooves includes a first receiving groove 125a for receiving a camera lens 151 therein and second receiving groove 125b
for receiving a switch pad 106 therein. The second receiving groove 125b has depth shallower than depth of the first receiving groove 125a. According to another embodiment of the present invention, it is possible to form only one groove for receiving the camera lens 151 or a key pad. In order to make an electric connection between the camera lens 151 or the key pads and an RF board (not shown) accommodated in the first housing 11, a guide hole 137 extending in a direction of the second hinge axis A2 can be formed in the hinge coupler 103 to provide a path for a flexible printed circuit. The key pad includes the switch pad 106 having at least one pair of dome switches 163, which are symmetrically aligned to each other, and a first opening 161 for exposing the camera lens 151, and a key button 107 for operating the dome switches 163. The key button 107 has a second opening 171 aligned with the first opening 161 for exposing the camera lens 151. In order to prevent the camera lens 151 and the key pads from being contaminated, the second opening 171 is covered with a transparent window 191.

The second housing 12 is coupled to the second hinge base 102 such that the second housing 12 can be rotated about the first hinge axis A1. At this time, a rotary hinge housing 104 can be interposed between the second housing 12 and the second hinge base 102 as a coupling device.

The rotary hinge housing 104 has a cylindrical shape. A coupling hole 145 is formed at one outer peripheral surface of the rotary hinge housing 104 and a hinge dummy 143 a extends from the other outer peripheral surface of the rotary hinge housing 104. The coupling hole 145 and the hinge dummy 143 a are positioned in the first hinge axis A1. The hinge dummy 143a is formed at an end thereof with a dummy hole 143b extending through an inner peripheral surface of the rotary hinge housing 104. A flexible printed circuit (not shown) can be aligned through the dummy hole 143b for an electric connection between electric circuits accommodated in the first and second housings 11 and 12.

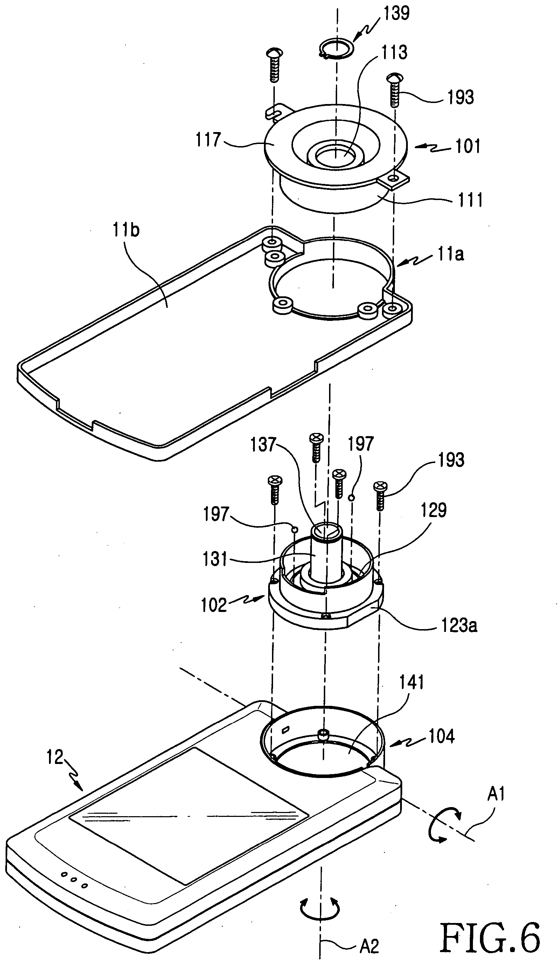

A coupling member 149 is provided at an inner portion of one end of the rotary hinge housing 104 so as to couple the second hinge base 102 to the rotary hinge housing 104. The key button 107 and the window 191 formed on the upper end of the second hinge base 102 are exposed to an exterior through an opening 141 formed at the end of the rotary hinge housing 104. The rotary hinge housing 104 is rotatably inserted into a semi-circular opening formed at one end of the second housing 12, as shown in FIG. 6. The rotary hinge housing 104 can also be integrally formed with the second hinge base 102. First hinge base 101 is inserted in circular hole 11a of first housing 11 which is arranged at one end of plate-like part 11a of this housing.

The second hinge module 200 is accommodated in the second housing 12 so as to rotatably couple the second housing 12 to the first hinge module 100. Referring to FIGS. 1 to 3, the second hinge module 200 includes a module housing 201, a hinge shaft 202, a stopper block 203, a compression spring 204 and a cap 205.

One end of the module housing 201 is opened and a slot 211 extends longwise from the opened end of the module housing 201. The hinge shaft 202 is assembled with the module housing 201 through the slot 211.

The hinge shaft 202 is accommodated in the module housing 201 so as to rotate about the first hinge axis A1. The hinge shaft 202 is provided at one end thereof with a hinge protrusion 221, which protrudes outwardly to an outer portion of the module housing 201 through the slot 211. A stopper slot 223 extending in a direction of the first hinge axis A1 is formed in the body of the hinge shaft 202 positioned in the module housing 201. The hinge protrusion 221 is inserted into the coupling hole 145 of the rotary hinge housing 104. Preferably, at least two stopper slots 223 are formed in the same angular interval.

The stopper block 203 has a stopper protrusion 231 corresponding to the stopper slot 223 of the hinge shaft 202. The stopper block 203 presses against an outer peripheral surface of the hinge shaft 202 by receiving elastic force from the compression spring 204. When the stopper protrusion 231 matches with the stopper slot 223 of the hinge shaft 202, the rotation of the hinge shaft 202 is stopped.

The cap 205 supports one end of the compression spring 204 while closing the opened end of the module housing 201.

The second hinge module 200 is fixed to one side of the second housing 12, and the hinge protrusion 221 of the hinge shaft 202, which is rotatably accommodated in the module housing 201, is supported on one side of the rotary hinge housing 104. The hinge dummy 143a of the rotary hinge housing 104 is supported on the other side of the second housing 12 so that the second housing 12 can rotate about the first hinge axis A1.

Hereinafter, the opening/closing operation of the portable wireless terminal having the hinge device will be described with reference to FIGS. 7 to 14.

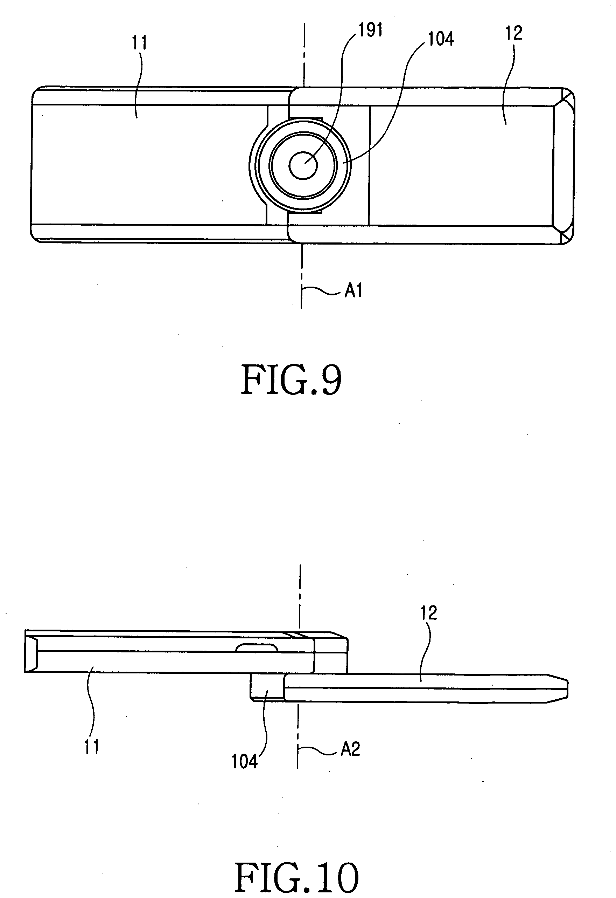

FIGS. 7 and 8 are plan and side views , respectfully, showing the first housing 11 resting on the second housing 12 in a folded position. In this state, when the second housing 12 rotates with respect to first housing 11 about the first hinge axis A1, the first and second housings 11 and 12 are positioned remote from each other as shown in FIGS. 9 and 10.

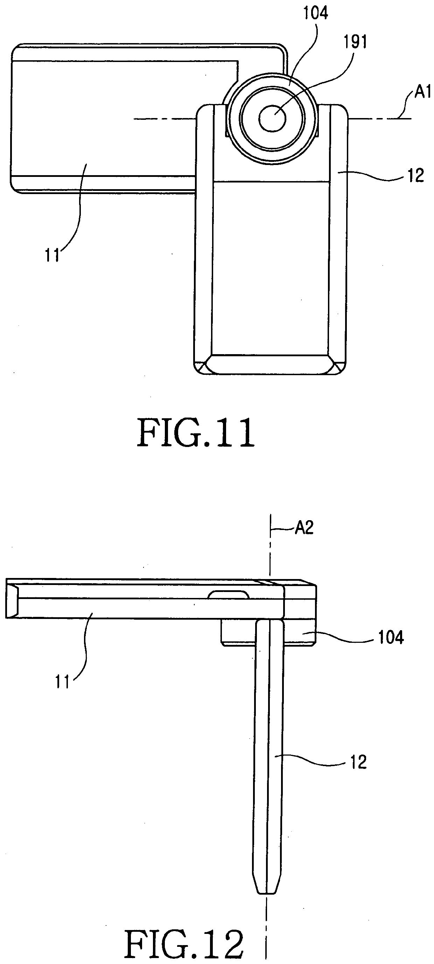

In this state, the second housing 12 rotates about the second hinge axis A2 at a right angle as shown in FIG. 11. In addition, the second housing 12 further rotates about the first hinge axis A1 at a right angle as shown in FIG. 12.

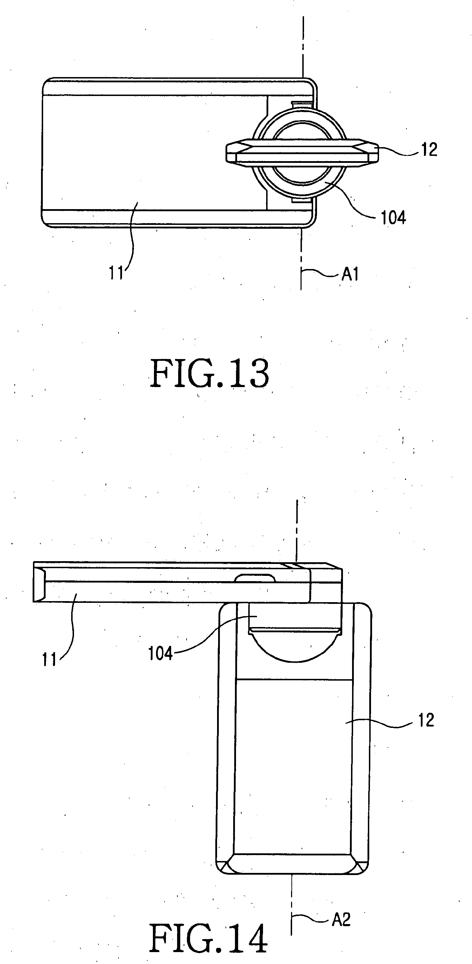

FIG. 13 shows the second housing 12 rotated at a right angle about the first hinge axis A1 from a position shown in FIG. 11, and FIG. 14 shows the second housing 12 rotated at a right angle about the second hinge axis A2 from a position shown in FIG. 12.

As shown in FIGS. 7 to 14, the second housing 12 can rotate about first and second hinge axes A1 and A2, so that the second housing 12 can be located in various angular positions with respect to the first housing 11. Although it is not illustrated, if the second housing 12 rotates about the second hinge axis A2 at a right angle from a position shown in FIG. 9, the second housing 12 rests on the first housing by turning over upper and lower surfaces thereof.

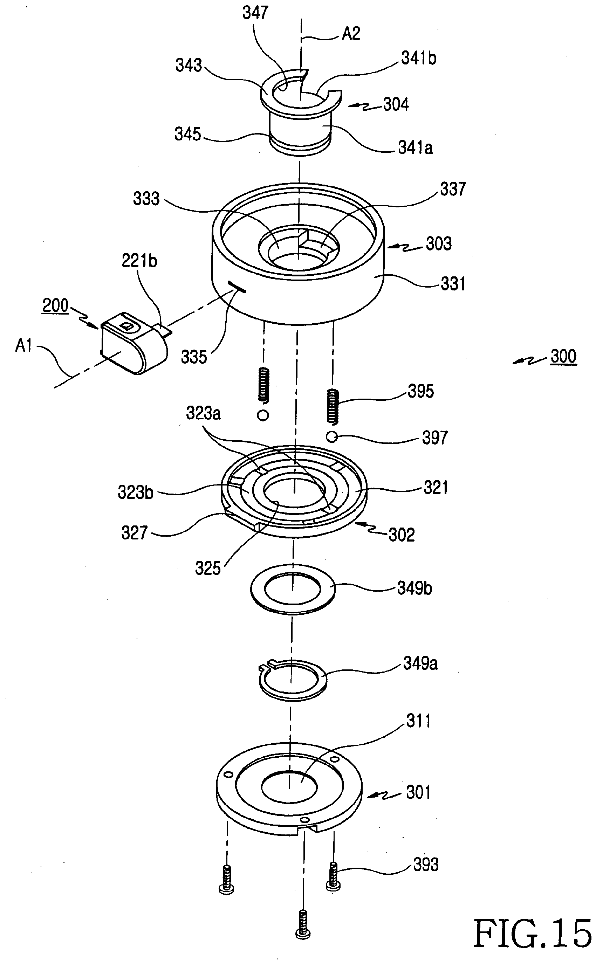

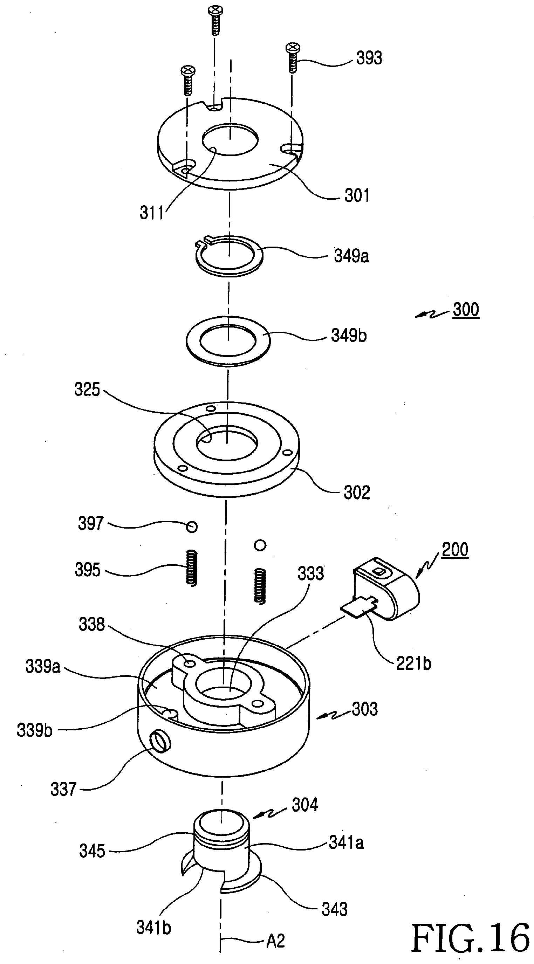

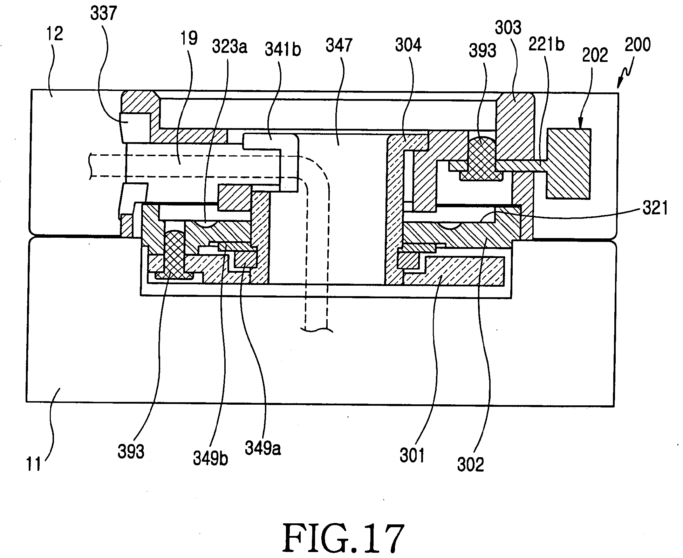

FIGS. 15 and 17 are views showing a hinge device of a portable wireless terminal according to a second embodiment of the present invention. As shown in FIGS. 15 to 17, the hinge device of the portable wireless terminal according to the second embodiment of the present invention includes a first hinge module 300 providing a second hinge axis A2 extending perpendicular to an upper surface of the portable wireless terminal and the second hinge module 200 (of the first embodiment) providing a first hinge axis A1 extending parallel to the upper surface of the portable wireless terminal. The first hinge axis A1 is aligned perpendicular to the second hinge axis A2. In addition, the first hinge axis A1 is rotatable about the second hinge axis A2,

The first hinge module 300 includes a first hinge base fixed to the first housing of the portable wireless terminal, and a second hinge base 303, which is aligned in opposition to the first hinge base and rotatably coupled to the first hinge base. The first hinge base has a fixing plate 301 fixed to an inner portion of the first housing and a base plate 302 fixed to the fixing plate 301 at an outer portion of the first housing.

The fixing plate 301 and the base plate 302 have coupling holes, respectively, so that the fixing plate 301 is coupled to the base plate 302 in opposition to each other by means of screws 393, which are secured into the coupling holes, while interposing the first housing 11 therebetween. In addition, the fixing plate 301 and the base plate 302 have first perforation holes 311 and 325, respectively, which are aligned along the second hinge axis A2.

A resting surface 321 facing the second hinge base 303 is formed at one side of the base plate 302. Slots 323a having predetermined depth are formed on the resting surface 321 at the same angular interval, and a sliding groove 323b passing through the slots 323a is formed along a circumferential portion of the resting surface 321. A first protrusion 327 outwardly protrudes from an outer wall of the base plate 302.

The second hinge base 303 has a recess 339a formed at a lower end of a rotating member 331 in order to receive the base plate 302, and spring holes 338 formed in opposition to the resting surface 321. The spring holes 338 face the sliding groove 323b of the base plate 302. Balls 397, which appear or disappear according to the elastic force of compression springs 395, are mounted on ends of the spring holes 338. Therefore, when the second hinge base 303 rotates, the balls 397 slidably move along the sliding groove 323b due to elastic force of the compression springs 395 applied thereto. The rotation of the second hinge base 303 is stopped as the balls 397 engage the slots 323a formed on the base plate 302. The recess 339a is formed at a sidewall thereof with a second protrusion 339b coupled to the first protrusion 327. A rotational range of the second hinge base 303 is limited due to a mechanical coupling between the first and second protrusions 327 and 339b.

The second hinge base 303 has a second perforation hole 333 extending in a direction of the second hinge axis A2 and aligned with first perforation holes 311 and 325. In addition, the second hinge base 303 is formed at an outer peripheral portion thereof with a coupling hole 335 and a dummy hole 337 for receiving the second hinge module 200. The coupling hole 335 and the dummy hole 337 are formed along the first hinge axis A1. The dummy hole 337 extends from an outer peripheral surface of the second hinge base 303 to the second perforation hole 333. In short, according to second embodiment of the present invention, the second hinge base and the rotary hinge housing described in the first embodiment of the present invention are integrally formed with each other.

The second hinge base 303 is rotatably coupled to the base plate 302 by means of a hinge coupler 304.

The hinge coupler 304 includes a flange 343 installed on an upper end of the second hinge base 303, a supporting shaft 341a protruding from the flange 343 in a direction of the second hinge axis A2 and extending beyond the first and second perforation holes 311, 325 and 333, and a coupling slot 345 formed along an outer circumferential portion of the supporting shaft 341a. The supporting shaft 341a has a guide hole 347 extending in a direction of the second hinge axis A2. The supporting shaft 341a communicates with the dummy hole 337 of the second hinge base 303 through a slot 341b formed at one end of the supporting shaft 341a. A flexible printed circuit 19 (FIG. 17) can be installed in the portable wireless terminal through the guide hole 347, the slot 341b, and the dummy hole 337.

The coupling slot 345 is coupled with a snap ring 349a at a lower end of the first hinge base at a lower end of the base plate 302, so that the first hinge base is rotatably coupled to the second hinge base 303 through the hinge coupler 304. A washer 349b is interposed between the base plate 302 and the snap ring 349b so as to facilitate the rotation of base plate 302 while preventing the base plate 302 from being worn. Since the second hinge base 303 is coupled to the base plate 302 by means of the hinge coupler 304, the first hinge module 300 provides the second hinge axis A2 extending perpendicular to the upper surface of the first housing of the portable wireless terminal.

The second hinge module 200 has a structure similar to a structure of the second hinge module of the first embodiment, except for a hinge protrusion 221b coupled to the second hinge base 303 and having a plate shape. Referring to FIG. 17, the hinge protrusion 221b is securely fixed to an inner portion of the second hinge base 303 by means of a screw 393.

As described above, the hinge device of the portable wireless terminal according to the present invention includes a first hinge axis extending parallel to the upper surface of the first housing and a second hinge axis extending perpendicular to the upper surface of the first housing to provide a rotational center for the first hinge axis, so the second housing coupled to the first housing can be rotated about two hinge axes. Accordingly, the second housing can be located in various positions with respect to the first housing. For example, the second housing can rest on the first housing by turning over upper and lower surface of the second housing. In addition, the hinge device of the portable wireless terminal according to the present invention allows the second housing to be opened/closed in various manners, thereby improving convenience of use. Accordingly, the portable wireless terminal having the hinge device of the present invention can satisfy various tastes of users.

While the present invention has been shown and described with reference to certain preferred embodiments thereof, it will be understood by those skilled in the art that various changes in form and details may be made therein without departing from the scope of the invention as defined by the appended claims.

## Claims

1. A hinge device of a portable wireless terminal which includes a first housing (11) and a second housing (12), the terminal having a first hinge axis (A1) extending parallel to an upper surface of the first housing (11), the second housing (12) being coupled to the first housing (11) in such a manner that the second housing is moveable towards and away from the first housing about the first hinge axis (A1), the terminal further having a second hinge axis (A2) extending perpendicular to the upper surface of the first housing (11), the second hinge axis (A2) providing a rotational center for the first hinge axis (A1), the first and second hinge axes (A1, A2) acting as rotational axes of the second housing (12) when the second housing (12) rotates with respect to the first housing (11),
the hinge device comprising:
a first hinge module (100) including a first hinge base (101) fixedly coupled to the first housing (11), and a second hinge base (102) rotatably coupled to the first hinge base (101) in opposition to the first hinge base so as to be rotated about the second hinge axis (A2); and
a second hinge module (200) fixed to the second housing (12) and connecting the second housing to the second hinge base (103) in order to allow the second housing to rotate about the first hinge axis (A1), said hinge device being **characterized by further comprising:**
receiving grooves (125a, 125b) formed on the upper portion of the second hinge base (102, 103);
a camera lens (151) accommodated in a lower portion of the receiving grooves (125a, 125b);
a keypad (106) accommodated in the receiving grooves (125a, 125b) above the camera lens (151); and
a first opening (161) formed at the center of the keypad (106) for exposing the camera lens (151).

2. The hinge device as claimed in claim 1, wherein the second hinge module (200) includes a module housing (201) fixed in the second housing (12), a hinge shaft (202) accommodated in the module housing so as to rotate about the first hinge axis (A1) and having a hinge protrusion (221b) protruding towards a side of the module housing (201) so as to be connected to the second hinge base (102, 303), and a stopper block (203) accommodated in the module housing in order to press against one side of the hinge shaft by receiving predetermined elastic force.

3. The hinge device as claimed in claim 2, wherein the hinge shaft (202) is formed at an outer peripheral surface thereof with at least two stopper slots (223) and the stopper block (203) is provided with a stopper protrusion (231), which is selectively inserted into the stopper slot as the hinge shaft rotates.

4. The hinge device as claimed in claim 1, wherein the first hinge base (101) has a cylindrical shape extending in a second hinge axis direction and is formed at a center thereof with a first perforation hole (113) extending in the second hinge axis direction, the second hinge base (102) having a cylindrical shape extending in the second hinge axis direction and is formed at a center thereof with a second perforation hole (127), and the first hinge module (100) includes hinge coupler (103) having a flange (133) supported on an upper end of the second hinge base (102) and a supporting shaft (131) protruding from the flange (133) and extending to a lower end of the first hinge base (101) by passing through the first and second perforation holes, and a snap ring (139) coupled with a coupling slot (135) of the supporting shaft at the lower end of the first hinge base.

5. The hinge device as claimed in claim 4, wherein the flange (133) is integrally formed with the second hinge base (102).

6. The hinge device as claimed in claim 4, wherein the hinge coupler (103) includes a guide hole (137) extending in the second hinge axis direction and formed through a center of the supporting shaft (131).

7. The hinge device as claimed in claim 1, further comprising at least one spring hole (115) formed on an upper circumferential portion of the first hinge base (101) at a same angular interval, at least one ball (197) exposed at an upper end of the spring hole by receiving elastic force from a compression spring (195) accommodated in the spring hole, and at least one slot formed at an inner upper end of the second hinge base (102) along a circumferential surface of the second hinge base at a same angular interval so as to selectively engage with the ball.

8. The hinge device as claimed in claim 7, wherein a sliding groove (129) is formed at an upper inner portion of the second hinge base (102) along a rotating route of the ball.

## Patentansprüche

1. Scharniervorrichtung für ein tragbares drahtloses Endgerät, welches ein erstes Gehäuse (11) und ein zweites Gehäuse (12) aufweist, wobei das Endgerät eine erste Scharnierachse (A1), die sich parallel zu einer Oberfläche des ersten Gehäuses (11) erstreckt, aufweist, das zweite Gehäuse (12) mit dem ersten Gehäuse (11) so gekoppelt ist, dass das zweite Gehäuse hin zu und weg von dem ersten Gehäuse um die erste Scharnierachse (A1) bewegbar ist, wobei das Endgerät weiterhin eine zweite Scharnierachse (A2) aufweist, die sich senkrecht zur Oberfläche des ersten Gehäuses (11) erstreckt, wobei die zweite Scharnierachse (A2) ein Drehzentrum für die erste Scharnierachse (A1) bereitstellt sowie erste und zweite Scharnierachsen (A1, A2) als Drehachsen des zweiten Gehäuses (12) arbeiten, wenn das zweite Gehäuse (12) sich bezüglich des ersten Gehäuses (11) dreht, wobei die Scharniervorrichtung aufweist:
ein erstes Scharniermodul (100) mit einer ersten Scharnierbasis (101), die fest mit dem ersten Gehäuse (11) gekoppelt ist, sowie eine zweite Scharnierbasis (102), die drehbar mit der ersten Scharnierbasis (101) entgegengesetzt zur ersten Scharnierbasis gekoppelt ist, um um die zweite Scharnierachse (A2) zu drehen, und
ein zweites Scharniermodul (200), welches an dem zweiten Gehäuse (12) fixiert ist und das zweite Gehäuse mit der zweiten Scharnierbasis (103) verbindet, um ein Drehen des zweiten Gehäuses um die erste Scharnierachse (A1) zu ermöglichen, wobei die Scharniervorrichtung **dadurch gekennzeichnet ist, dass** sie weiterhin aufweist:
Aufnahmenuten (125a, 125b), die in einem oberen Bereich der zweiten Scharnierbasis (102, 103) gebildet sind;
eine Kameralinse (151), die in einem unteren Bereich der Aufnahmenuten (125a, 125b) aufgenommen ist;
eine Tastatur (106), welche in den Aufnahmenuten (125a, 125b) oberhalb der Kameralinse (151) aufgenommen ist, und
eine erste Öffnung (161), die in der Mitte der Tastatur (106) zum Freilegen der Kameralinse (151) gebildet ist.

2. Scharniervorrichtung nach Anspruch 1, wobei das zweite Scharniermodul (200) ein erstes Modulgehäuse (201) aufweist, welches in dem zweiten Gehäuse (12) befestigt ist, sowie eine Scharnierwelle (202), die in dem Modulgehäuse so aufgenommen ist, dass sie um die erste Scharnierachse (A1) dreht, und einen Scharniervorsprung (221b) aufweist, der zu einer Seite des Modulgehäuses (201) so vorsteht, dass er mit der zweiten Scharnierbasis (102, 303) verbunden ist, sowie einen Stopperblock (203) aufgenommen in dem Modulgehäuse aufweist zum Drücken gegen eine Seite der Scharnierwelle durch Aufnahme einer vorbestimmten elastischen Kraft.

3. Scharniervorrichtung nach Anspruch 2, wobei die Scharnierwelle (202) an einer äußeren Peripheriefläche mit wenigstens zwei Stoppschlitzen (223) ausgebildet ist und der Stopperblock (203) mit einem Stoppvorsprung (231) ausgebildet ist, der selektiv in den Stopperschlitz bei Drehen der Scharnierwelle einsetzbar ist.

4. Scharniervorrichtung nach Anspruch 1, wobei die erste Scharnierbasis (101) eine zylindrische Form aufweist, die sich in einer zweiten Scharnierachsenrichtung erstreckt, und an einer Mitte davon mit einer ersten Perforierungsöffnung (113) ausgebildet ist, die sich in Richtung der zweiten Scharnierachse erstreckt, die zweite Scharnierbasis (102) eine zylindrische Form aufweist, die sich in Richtung der zweiten Scharnierachse erstreckt und in ihrer Mitte mit einer zweiten Perforieröffnung (127) ausgebildet ist sowie das erste Scharniermodul (100) einen Scharnierkoppler (103) mit einem Flansch (133) aufweist, der an einem oberen Ende der zweiten Scharnierbasis (102) gelagert ist, sowie eine Tragwelle (131), die von dem Flansch (133) vorsteht und sich zu einem unteren Ende der ersten Scharnierbasis (101) unter Durchtreten durch erste und zweite Perforationsöffnungen erstreckt, sowie einen Federring (139), der mit einem Kupplungsschlitz (135) der Tragwelle am unteren Ende der ersten Scharnierbasis gekoppelt ist.

5. Scharniervorrichtung nach Anspruch 4, wobei der Flansch (133) einteilig mit der zweiten Scharnierbasis (102) gebildet ist.

6. Scharniervorrichtung nach Anspruch 4, wobei der Scharnierkoppler (102) eine Führungsöffnung (137) aufweist, die sich in Richtung der zweiten Scharnierachse erstreckt und durch eine Mitte der Tragwelle (131) gebildet ist.

7. Scharniervorrichtung nach Anspruch 1, welche weiterhin wenigstens eine Federöffnung (115) aufweist, die in einem oberen Umfangsbereich der ersten Scharnierbasis (101) im gleichen Winkelintervall gebildet ist, wenigstens eine Kugel (197) an einem oberen Ende der Federöffnung freiliegt durch Aufnahme elastischer Kraft von einer Kompressionsfeder (195), die in der Federöffnung aufgenommen ist, und wenigstens ein Schlitz an einem inneren oberen Ende der zweiten Scharnierbasis (102) entlang einer Umfangsfläche der zweiten Scharnierbasis im gleichen Winkelintervall gebildet ist, um selektiv mit der Kugel in Eingriff zu sein.

8. Scharniervorrichtung nach Anspruch 7, wobei eine Gleitnut (129) an einem oberen Innenbereich der zweiten Scharnierbasis (102) entlang einer Drehroute der Kugel gebildet ist.

## Revendications

1. Dispositif de charnière d'un terminal sans fil portable qui comprend un premier boîtier (11) et un deuxième boîtier (12), le terminal présentant un premier axe de charnière (A1) s'étendant parallèlement à une surface supérieure du premier boîtier (11), le deuxième boîtier (12) étant couplé au premier boîtier (11) de sorte que le deuxième boîtier soit mobile en direction et en s'éloignant du premier boîtier selon le premier axe de charnière (A1), le terminal présentant en outre un deuxième axe de charnière (A2) s'étendant perpendiculairement à la surface supérieure du premier boîtier (11), le deuxième axe de charnière (A2) offrant un centre de rotation pour le premier axe de charnière (A1), les premier et deuxième axes de charnière (A1, A2) agissant comme des axes de rotation du deuxième boîtier (12) lorsque le deuxième boîtier (12) effectue une rotation par rapport au premier boîtier (11),
le dispositif de charnière comprenant :
un premier module de charnière (100) incluant une première base de charnière (101) couplée de manière fixe au premier boîtier (11), et une deuxième base de charnière (102) couplée en rotation à la première base de charnière (101) en opposition à la première base de charnière de sorte à effectuer une rotation sur le deuxième axe de charnière (A2) ; et
un deuxième module de charnière (200) fixé au deuxième boîtier (12) et connectant le deuxième boîtier à la deuxième base de charnière (103) pour permettre au deuxième boîtier d'effectuer une rotation sur le premier axe de charnière (A1),
un dit dispositif de charnière étant **caractérisé en ce qu'il comprend en outre :**
des rainures de réception (125a, 125b) formées sur la partie supérieure de la deuxième base de charnière (102, 103) ;
un objectif d'appareil photographique (151) positionné dans une partie inférieure des rainures de réception (125a, 125b) ;
un pavé de touches (106) positionné dans les rainures de réception (125a, 125b) au-dessus de l'objectif d'appareil photographique (151) ; et
une première ouverture (161) formée au centre du pavé de touches (106) pour exposer l'objectif d'appareil photographique (151).

2. Le dispositif de charnière tel que revendiqué à la revendication 1, dans lequel le deuxième module de charnière (200) comprend un boîtier de module (201) fixé dans le deuxième boîtier (12), une tige de charnière (202) positionnée dans le boîtier de module de sorte à effectuer une rotation sur le premier axe de charnière (A1) et présentant une partie saillante de charnière (221b) débordant vers un côté du boîtier de module (201) de sorte à être en contact avec la deuxième base de charnière (102, 303), et un bloc d'arrêt (203) positionné dans le boîtier de module de sorte à appuyer contre un côté de la tige de charnière par la réception d'une force élastique prédéterminée.

3. Le dispositif de charnière tel que revendiqué à la revendication 2, dans lequel la tige de charnière (202) est formée sur une surface périphérique extérieure de celui-ci avec au moins deux logements d'arrêt (223) et le logement d'arrêt (203) est fourni avec un épaulement d'arrêt (231), qui est sélectivement inséré dans le logement d'arrêt lorsque la tige de charnière effectue une rotation.

4. Le dispositif de charnière tel que revendiqué à la revendication 1, dans lequel la première base de charnière (101) présente une forme cylindrique s'étendant dans une direction axiale de deuxième charnière et est formée à un centre de celle-ci avec un premier trou de perforation (113) s'étendant dans la direction axiale de deuxième charnière, la deuxième base de charnière (102) présentant une forme cylindrique s'étendant dans la direction axiale de deuxième charnière et est formée à un centre de celle-ci avec deuxième trou de perforation (127), et le premier module de charnière (100) comprend un coupleur de charnière (103) présentant une bride (133) appuyée sur une extrémité supérieure de la deuxième base de charnière (102) et une tige de soutien (131) débordant de la bride (133) et s'étendant à une extrémité inférieure de la première base de charnière (101) en traversant les premier et deuxième trous de perforation, et un circlip (139) couplé à un logement de couplage (135) de la tige de soutien à l'extrémité inférieure de la première base de charnière.

5. Le dispositif de charnière tel que revendiqué à la revendication 4, dans lequel la bride (133) est intégralement formée avec la deuxième base de charnière (102).

6. Le dispositif de charnière tel que revendiqué à la revendication 4, dans lequel le coupleur de charnière (103) comprend un trou de guidage (137) s'étendant dans la direction du deuxième axe de charnière et formé à travers un centre de la tige de soutien (131).

7. Le dispositif de charnière tel que revendiqué à la revendication 1, comprenant en outre au moins un trou de ressort (115) formé sur une partie circonférentielle supérieure de la première base de charnière (101) à un même intervalle angulaire, au moins une bille (197) exposée à une extrémité supérieure du trou de ressort par la réception d'une force élastique provenant d'un ressort de compression (195) disposé dans le trou de ressort, et au moins un logement formé à une extrémité supérieure intérieure de la deuxième base de charnière (102) le long d'une surface circonférentielle de la deuxième base de charnière à un même intervalle angulaire de sorte à entrer sélectivement en contact avec la bille.

8. Le dispositif de charnière tel que revendiqué à la revendication 7, dans lequel une rainure coulissante (129) est formée dans une partie intérieure supérieure de la deuxième base de charnière (102) le long d'une course rotative de la bille.
